# EUROPEAN PATENT SPECIFICATION

(11) **EP 2 691 724 B1**
(45) Date of publication and mention of the grant of the patent: **01.06.2016**
(21) Application number: 12714869.0
(22) Date of filing: 19.03.2012
(51) Int. Cl.: F28D 20/00, B01J 7/02, B01J 19/24

(54) **REACTION VESSEL FOR CHEMICAL HEAT STORAGE WITH PARTICULAR FLOW PATHS**
REAKTIONSGEFÄSS FÜR CHEMISCHEN WÄRMESPEICHER MIT BESONDEREN FLUIDKANÄLEN
CUVE DE RÉACTION POUR STOCKAGE DE CHALEUR CHIMIQUE AVEC DES TRAJET D'ÉCOULEMENT PARTICULIERS

(30) Priority: 31.03.2011 JP 2011080217
(43) Date of publication of application: 05.02.2014
(73) Proprietor: Kabushiki Kaisha Toyota Chuo Kenkyusho, Nagakute-shi, Aichi 480-1192 (JP)
(72) Inventor: SHIMAZU, Takashi, Nagakute-shi Aichi 480-1192 (JP); WAKASUGI, Tomohisa, Nagakute-shi Aichi 480-1192 (JP); MOCHIZUKI, Miyo, Nagakute-shi Aichi 480-1192 (JP); MIEDA, Hiroshi, Kariya-City Aichi 448-8661 (JP); KUWAYAMA, Kazutoshi, Kariya-City Aichi 448-8661 (JP)
(74) Representative: Kramer Barske Schmidtchen Patentanwälte PartG mbB
(86) International application number: PCT/JP2012/058274
(87) International publication number: WO 2012/133600

(56) References cited:
- US-A- 5 653 106
- US-A1- 2002 080 563
- US-A1- 2005 163 701
- US-A1- 2005 264 997
- US-B1- 6 367 782

## Description

### Technical Field

The present invention relates to a reaction vessel.

### Description of the Related Art

As described, for example, in Japanese Patent Application Laid-Open (JP-A) No. 7-180539, reaction vessels are known that are furnished with a porous tube, the interior of the porous tube being filled with plural calcium oxide molded bodies, and heat resistant porous members being layered between each of the plural calcium oxide molded bodies.

The above reaction vessel is configured with a single or plural water supply tubes simply connected to a reaction vessel external wall portion, and an operation is assumed in which water supplied to the reaction vessel penetrates to the interior of the reaction vessel by passing through spaces formed by the heat resistant porous members disposed inside the reaction vessel.

However, with such a configuration, as the water passing through the pore spaces in the heat resistant porous member flows towards the interior of the reaction vessel, it also at the same time comes into contact with the calcium oxide molded bodies, and hydration reaction takes place instantaneously in the vicinity of the supply openings, so that some of the supplied water vaporizes into water vapor due to the reaction heat. The vaporized water vapor impedes the penetration of the water to the interior of the reaction vessel making it difficult to achieve a uniform water supply to the whole of the calcium oxide molded bodies. In other words, water vapor generation performance is low with conventional technology employing heat resistant porous members.

US 5,653,106 A relates to an exothermic heat generating apparatus, according to the preamble of claim 1. US 2005/264997 A1 relates to a method and apparatus for providing distributed fluid flows in a thermal management arrangement.
US 2005/163701 A1 relates to a process for producing hydrogen peroxide using microchannel technology.
US 6,367,782 B1 relates to a water distributor.
US 2002/080563 A1 relates to a multiscale transport apparatus and methods.

### Summary of the Invention

A subject of the invention is to provide a reaction vessel that is able to achieve a uniform supply of water to a chemical heat storage material and to increase the water vapor generation performance.

A first aspect of the present invention is a reaction vessel including: a chemical heat storage material for generating water vapor by reaction heat generated when the chemical heat storage material reacts with water, and storing heat by heating to separate water from the chemical heat storage material; and a heat exchanger that internally houses the chemical heat storage material, wherein the heat exchanger includes a heat storage material housing space in which the chemical heat storage material is housed, a water flow path configured including a plurality of ejection outlets in communication with the heat storage material housing space, a main tube connected to an external water supply section and a branch tube in communication with the main tube and the plural ejection outlets, and a heating medium flow path through which the heating medium is caused to flow for heating the chemical heat storage material, wherein the plurality of ejection outlets is arrayed in a staggered formation.

According to such a reaction vessel, water can be uniformly reacted with the whole of the chemical heat storage material by providing the water flow paths to the interior of the heat exchanger and supplying water to the whole of the chemical heat storage material through the plural ejection outlets. Also, such a configuration enables a greater number of ejection outlets to be easily provided and hence the water penetration distance can be reduced. It can be greatly suppressed for the water vapor which has been generated by hydration reaction heat to block flow paths of water and impede penetration of the water into the chemical heat storage material. Since uniform reaction with the whole of the chemical heat storage material can accordingly be achieved, the reaction speed can be increased, and as a result the ability to generate water vapor can be further enhanced by the efficiently obtained reaction heat. Furthermore, water can be uniformly supplied to the whole of the chemical heat storage material using the minimum number of openings due to the plurality of ejection outlets being arrayed in a staggered formation.

A reaction vessel of a second aspect of the present invention is the reaction vessel of the first aspect wherein the branch tube is formed in a tree shape including plural branching sections.

According to such a reaction vessel, water can be distributed using dynamic pressure due to the branch tube being configured in a tree shape having many branching sections. Water can accordingly be ejected from plural ejection outlets at the same time.

A reaction vessel of a third aspect of the present invention is the reaction vessel of the first aspect or the second aspect wherein: the heat storage material housing space extends along a vertical direction and includes a discharge outlet at a vertical direction top side end section of the heat storage material housing space for externally discharging water vapor generated by the chemical heat storage material; and the direction of flow of supplied water in the branch tube is aligned with the direction in which the water vapor is discharged.

According to such a reaction vessel, the direction of flow of water supplied into the branch tubes is aligned with the discharge direction of water vapor externally discharged from the heat storage material housing space. Any unfavorable influence that might be caused by misalignment between the temperature distribution for water vapor generation and the water supply direction can accordingly be suppressed.

A reaction vessel of a fourth aspect of the present invention is the reaction vessel of any one of the first aspect to the third aspect wherein the heat exchanger includes a water flow path forming wall section in which the water flow path is formed.

A reaction vessel of a fifth aspect of the present invention is the reaction vessel of the fourth aspect wherein the water flow path forming wall section is provided with an ejection-outlet unformed region at the discharge outlet side and the plural ejection outlets are formed further to the vertical direction lower side than the ejection-outlet unformed region.

In reaction vessels, ideally heat generation and water vapor generation is performed at the vertical direction lower side of the reaction vessel, and heat generation and super-heating of water vapor is performed at the vertical direction upper side of the reaction vessel.

Accordingly, when the plural ejection outlets are formed further towards the vertical direction lower side than the unformed region at the discharge outlet side of the water flow path forming wall section, as in such a reactor vessel, the temperature at the peripheral edge portion of the discharge outlet can be suppressed from falling as water is not supplied towards the peripheral area of the discharge outlets, enabling efficient collection of heat generated in the hydration reaction at the vertical direction lower side for use in super-heating water vapor at the discharge outlet side.

A reaction vessel of a sixth aspect of the present invention is the reaction vessel of the fifth aspect wherein a heat transfer section is provided between the ejection-outlet unformed region of the water flow path forming wall section and the chemical heat storage material.

According to such a reaction vessel, by providing the heat transfer section between the ejection-outlet unformed region of the water flow path forming wall section and the chemical heat storage material, heat exchange by convection can be promoted between the chemical heat storage material that is in a heat generating state and the water flow path forming wall section, and more efficient high temperature water vapor generation can be achieved.

A reaction vessel of a seventh aspect of the present invention is the reaction vessel of any one of the first aspect to the sixth aspect wherein a shielding portion is provided at the vertical direction bottom side of each of the plural ejection outlets to block water vapor flowing towards the vertical direction top side inside the heat storage material housing space.

There is a tendency shown at vicinities of the ejection outlets that the water supplied by the ejection outlets and the water vapor generated at a lower side from the ejection outlets interfere with each other so as to impede dissipation of the supplied water from the ejection outlets. The supplied water is ejected from the ejection outlets disposed in a distributed array and there is a need for the supplied water to be uniformly dispersed so as to fill in areas between the ejection outlets (wetting out). However the water vapor generated at the lower side flows within the heat storage material housing spaces while the flow amount and speed of the generated water vapor increase.

Consequently, when the shielding portion is provided at the vertical direction bottom side of each of the plural ejection outlets to block the water vapor flowing upwards in the vertical direction inside the heat storage material housing space, as in such a reaction vessel, interference of the water vapor which flows from the lower side is suppressed so as to enable efficient dispersed water supply from the ejection outlets.

A reaction vessel of an eighth aspect of the present invention is the reaction vessel of any one of the fourth aspect to the seventh aspect wherein a water vapor flow path is formed at portions of the water flow path forming wall section other than at locations where the plural ejection outlets are formed, the water vapor flow path being in communication with the heat storage material housing space and letting water vapor generated by the chemical heat storage material flow through.

In such a reaction vessel, since the water vapor flow path is formed at the water flow path forming wall section so as to allow the water vapor generated by the chemical heat storage material to flow through, the cross-sectional area of flow paths for the water vapor is enlarged, and smooth discharge of the water vapor can be accomplished as there is a reduction in pressure loss accompanying flow of internal water vapor toward neighborhood. Furthermore, the water vapor with a higher temperature can be obtained since water vapor created at the lower side is supplied toward the chemical heat storage material that was supplied with water and has generated heat.

Since the water vapor flow path is formed at portions where the plural ejection outlets are not located, the generated water vapor in the water vapor flow path can be suppressed from flowing into the ejection outlets and impeding water supply from the ejection outlets to the chemical heat storage material.

A reaction vessel of a ninth aspect of the present invention is the reaction vessel of any one of the first aspect to the eighth aspect wherein the branch tube includes a pressure increasing portion that, on progression along the flow direction of the water, has a stepped reduction in cross-sectional area orthogonal to the water flow direction.

According to such a reaction vessel, a pressure of water flowing in the branch tube can be controlled in steps by the pressure increasing portion which has a stepped reduction in cross-sectional area orthogonal to the water flow direction on progression along the water flow direction.

A reaction vessel of a tenth aspect of the present invention is the reaction vessel of any one of the first aspect to the ninth aspect wherein the plural ejection outlets include a circular shape portion and plural elongated holes formed in a shape radiating out from an outer periphery of the circular shaped portion.

According to such a reaction vessel, due to each of the plural ejection outlets including the elongated holes formed in a shape radiating out from the outer periphery of the circular shaped portion, a wet surface area of wall faces of the chemical heat storage material where the plural ejection outlets open can be expanded by the amount of the plural elongated holes.

A reaction vessel of an eleventh aspect of the present invention is the reaction vessel of any one of the fourth aspect to the tenth aspect wherein a heat insulating portion is provided between the water flow path forming wall section and the chemical heat storage material.

According to such a reaction vessel, due to providing the heat insulating portion between the water flow path forming wall section provided with the water flow path and the chemical heat storage material, the heat of the chemical heat storage material can be suppressed from being transmitted to the water flow path and water vapor generated inside the water flow path can be suppressed.

A reaction vessel of a twelfth aspect of the present invention is the reaction vessel of any one of the fourth aspect to the eleventh aspect wherein: the heat exchanger further includes a separating wall section between the heating medium flow path and the heat storage material housing space; and the chemical heat storage material is restrained by the separating wall section and the water flow path forming wall section.

According to such a reaction vessel, since the chemical heat storage material is restrained by the separating wall section, which is provided between the heating medium flow path and the heat storage material housing space, and the water flow path forming wall section, the chemical heat storage material can be suppressed from disintegrating due to changes in volume accompanying hydration and dehydration reactions.

A reaction vessel of a thirteenth aspect of the present invention is the reaction vessel of any one of the first aspect to the twelfth aspect wherein: the branch tube includes a pressure regulation section formed by a capillary tube or orifice.

According to such a reaction vessel, since the branch tube includes the pressure regulation section formed from a capillary tube or orifice, an amount of water flowing in each portion of the branch tube can be made uniform as the internal pressure of the branch tube is adjusted by the pressure regulation section.

A reaction vessel of a fourteenth aspect of the present invention is the reaction vessel of any one of the fourth aspect to the thirteenth aspect wherein plural fine grooves are formed on a wall face at the heat storage material housing space side of the water flow path forming wall section, wherein the fine grooves are connected to the plural ejection outlets and a width dimension of each of the fine grooves is smaller than a diameter dimension of the plural ejection outlets.

According to such a reaction vessel, water can be supplied by capillary action in the fine grooves to the whole of the chemical heat storage material due to the plural fine grooves formed on the wall face at the heat storage material housing space side of the water flow path forming wall section as the fine grooves are connected to the plural ejection outlets and have a width dimension smaller than the diameter dimension of each of the plural ejection outlets.

A reaction vessel of a fifteenth aspect of the present invention is the reaction vessel of the fourteenth aspect wherein the plural fine grooves extend from the plural ejection outlets towards the vertical direction upper side.

According to such a reaction vessel, the plural fine grooves are formed on the wall face at the heat storage material housing space side of the water flow path forming wall section while the fine grooves extend from the plural ejection outlets towards the vertical direction upper side. Accordingly, the water not only can be supplied to the whole of the chemical heat storage material by utilizing the capillary action of the fine grooves, but the flow of water from the fine grooves towards the vertical direction lower side can also be suppressed.

A reaction vessel of a sixteenth aspect of the present invention is the reaction vessel of the fourteenth aspect wherein the plural fine grooves extend in a horizontal direction from each of the plural ejection outlets.

According to such a reaction vessel, the plural fine grooves are formed on the wall face at the heat storage material housing space side of the water flow path forming wall section while the fine grooves extend out in a horizontal direction from each of the plural ejection outlets to. Accordingly, water retention ability not only can be enhanced in the wall face at the heat storage material housing space side of the water flow path forming wall section, but also the flow of water from the fine grooves towards the vertical direction lower side can be suppressed.

According to the present invention as described in detail above, the water vapor generating performance in the reaction vessel can be enhanced.

### Brief Description of the Drawings

Fig. 1 is a diagram illustrating an overall configuration of a water vapor generating system employing a reaction vessel according to an exemplary embodiment of the present invention;
Fig. 2 is a perspective view of the reaction vessel shown in Fig. 1;
Fig. 3 is a plan view of the reaction vessel shown in Fig. 1;
Fig. 4 is a cross-section taken on line A-A of Fig. 3;
Fig. 5 is a cross-section taken on line B-B of Fig. 3;
Fig. 6 is a diagram of the water flow path forming wall section shown in Fig 4 as viewed from the direction of arrows C-C;
Fig. 7 is an exploded perspective view illustrating a modified example of the reaction vessel shown in Fig. 1;
Fig. 8 is a cross-section illustrating a modified example of the water flow path illustrated in Fig. 1;
Fig. 9 is a cross-section illustrating another modified example of the water flow path illustrated in Fig. 1;
Fig. 10 is a diagram illustrating a modified example of an ejection outlet shown in Fig. 6;
Fig. 11 is a cross-section illustrating another modified example of the reaction vessel shown in Fig. 1;
Fig. 12 is a diagram illustrating a modified example of the water flow path forming wall section shown in Fig. 6;
Fig. 13 is a diagram illustrating water vapor flow along the water flow path forming wall section shown in Fig. 12;
Fig. 14 is a diagram illustrating a modified example of the ejection outlet periphery portion shown in Fig. 13;
Fig. 15 is a diagram illustrating a modified example of the water flow path forming wall section shown in Fig. 6;
Fig. 16 is a cross-section taken on line D-D of Fig. 15;
Fig. 17 is a diagram illustrating a modified example of the water flow path shown in Fig. 5;
Fig. 18 is a perspective view illustrating another modified example of a reaction vessel shown in Fig. 1;
Fig. 19 is an enlarged diagram of a relevant portion of Fig. 18;
Fig. 20 is a perspective view illustrating another modified example of a reaction vessel shown in Fig. 1;
Fig. 21 is an enlarged diagram of a relevant portion of Fig. 20;
Fig. 22 is a perspective view illustrating another modified example of a reaction vessel shown in Fig. 20;
Fig. 23 a diagram illustrating another modified example of a water flow path forming wall section shown in Fig. 6;
Fig. 24 is an enlarged diagram of a relevant portion of Fig. 23; and
Fig. 25 is an enlarged diagram of a relevant portion of Fig. 23.

### DETAILED DESCRIPTION OF THE INVENTION

Explanation follows regarding an exemplary embodiment of the present invention.

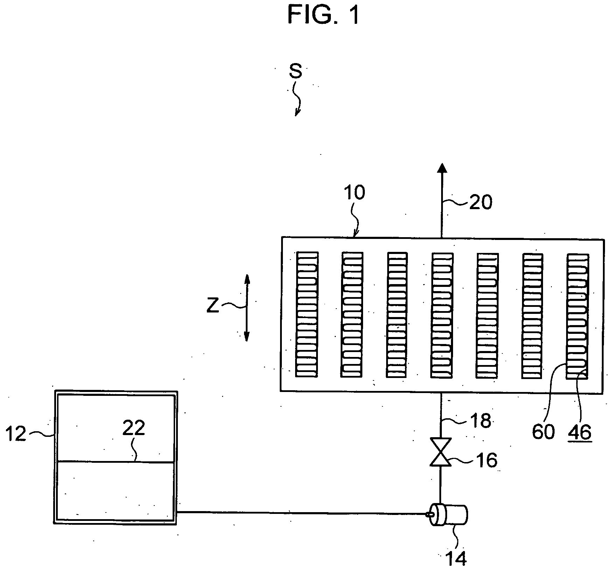

As shown in Fig. 1, a reactor vessel 10 according to an exemplary embodiment of the present invention is applied to a water vapor generation system S. The water vapor generation system S includes a water tank 12, a water supply tube 18 provided with a liquid feed pump 14 and a valve 16, and a water vapor discharge tube 20 in addition to the reactor vessel 10.

Water 22 is stored in the water tank 12. The reactor vessel 10 is connected by the water supply tube 18 to the water tank 12 in an airtight state. Water vapor is generated when the reactor vessel 10 is supplied with water from the water tank 12, and water vapor is supplied through the water vapor discharge tube 20 to a water vapor using device, not shown in the drawings. A specific example of the reactor vessel 10 is configured as follows.

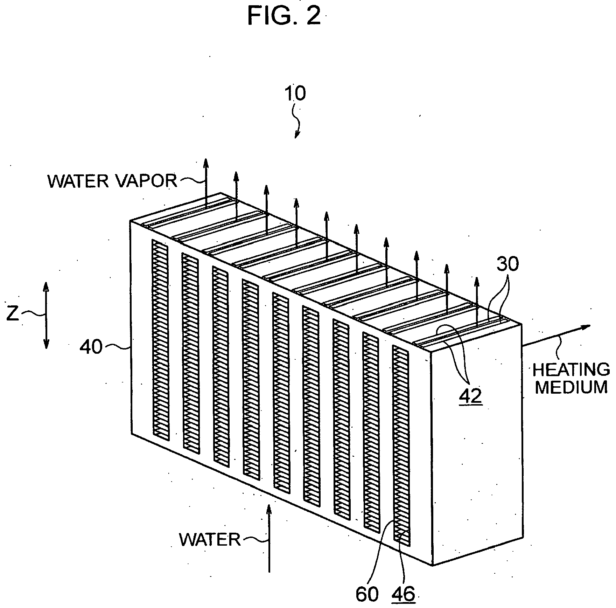

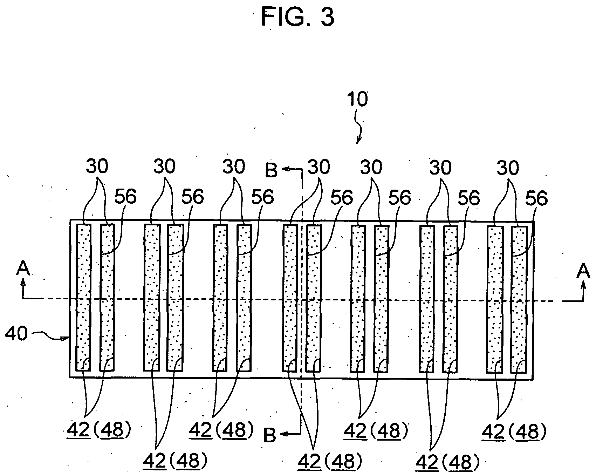

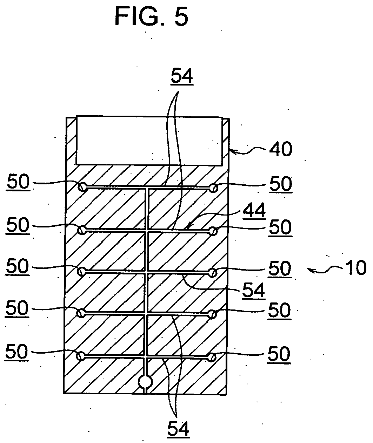

Namely, as shown in Fig. 2 to Fig. 5, the reactor vessel 10 includes a chemical heat storage material 30 and a heat exchanger 40 for internally housing the chemical heat storage material 30. The chemical heat storage material 30 generates water vapor through reaction heat arising when the chemical heat storage material 30 has reacted with water, and stores heat by heating so as to separate water from the chemical heat storage material 30. A plate shape molded form or a granular form may, for example, be employed for the chemical heat storage material 30.

In the present exemplary embodiment, calcium oxide (CaO) that is an alkali earth metal oxide, is employed as the chemical heat storage material 30. Therefore in the reactor vessel 10, a reversible hydration reaction and dehydration reaction is obtained as set out below.

CaO + H₂O ⇔ Ca (OH)₂

Showing the endothermic and exothermic amounts Q on the above formula gives:

Ca (OH)₂ + Q → CaO + H₂O

CaO + H₂O → Ca (OH)₂ + Q

The heat exchanger 40 includes heat storage material housing spaces 42 in which the chemical heat storage material 30 is housed, a water flow path 44 in communication with the water supply tube 18 referred to above (see Fig. 1) and the heat storage material housing spaces 42, and heating medium flow paths 46 for letting a heating medium flow through to heat the chemical heat storage material 30.

The heat storage material housing spaces 42 extend along a vertical direction and end sections at the vertical direction top side are served as discharge outlets 48 for externally discharging water vapor generated by the chemical heat storage material 30. The discharge outlets 48 are connected to the water vapor discharge tube 20 (see Fig. 1).

The water flow path 44 is configured with plural ejection outlets 50 in communication with the heat storage material housing spaces 42, a main tube 52 connected to the water supply tube 18 serving as an example of an external water supply section, and branch tubes 54 that are in communication with the main tube 52 and the plural ejection outlets 50.

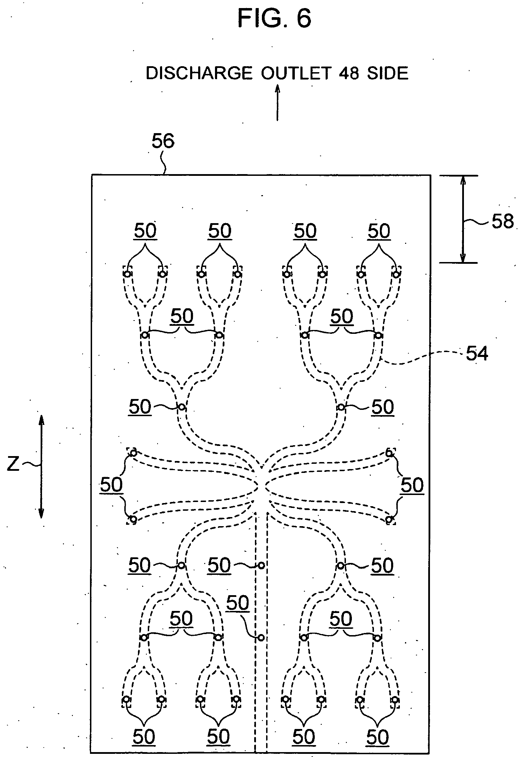

The branch tubes 54 are, as shown in Fig. 6, formed in a tree shape having many branching sections. The plural ejection outlets 50 are arrayed along the vertical direction (Z direction), and in the present exemplary embodiment are arrayed as an example in a staggered formation according to the present invention.

The heat exchanger 40 also includes water flow path forming wall sections 56 in which the water flow path 44 is formed. The plural ejection outlets 50 referred to above are formed in the water flow path forming wall section 56 further to the vertical direction bottom side than an unformed region 58 at the vertical direction top side (the side of the discharge outlets 48) of the water flow path forming wall section 56

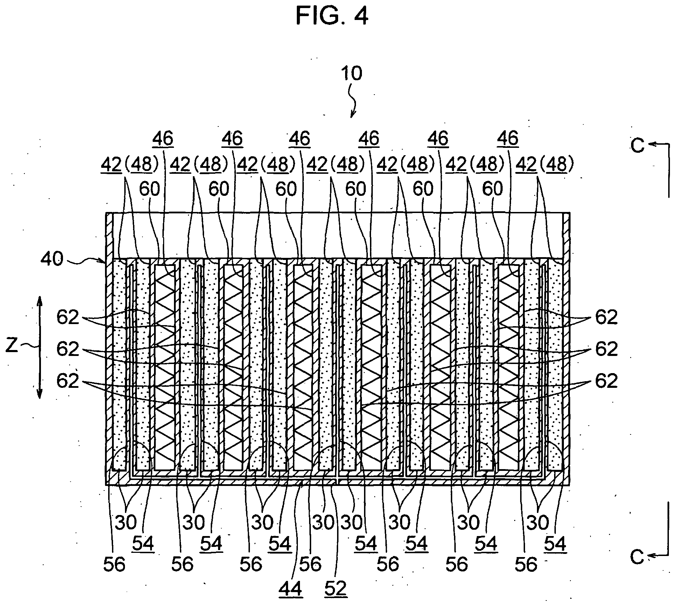

Fins 60 are provided in the heating medium flow paths 46, as shown in Fig. 4. Separating wall sections 62 are formed between the heating medium flow paths 46 and the heat storage material housing spaces 42.

Explanation follows regarding operation and effect of the exemplary embodiment of the present invention.

According to the reactor vessel 10, the water flow path 44 is provided inside the heat exchanger 40 and water is supplied from the plural ejection outlets 50 to the whole of the chemical heat storage material 30. Water can thereby be uniformly reacted with the whole of the chemical heat storage material 30. Adopting such a configuration enables a greater number of ejection outlets 50 to be easily provided and hence the water penetration distance can be reduced. Accordingly, it can be greatly suppressed for the water vapor which has been generated by hydration reaction heat to block the flow paths and impede penetration of water into the chemical heat storage material 3. Since uniform reaction with the whole of the chemical heat storage material 30 can accordingly be achieved, the reaction speed can be increased, and as a result the ability to generate water vapor by the efficiently obtained reaction heat can be enhanced.

The branch tubes 54 are configured in a tree shape having many branching sections, and so water can be distributed using dynamic pressure. Water can accordingly be ejected from plural ejection outlets 50 at the same time.

The plural ejection outlets 50 are also arrayed for the chemical heat storage material 30 in a staggered formation and so water can be supplied uniformly to the whole of the chemical heat storage material 30 using the minimum number of openings.

The direction of flow of water supplied into the branch tubes 54 is aligned with the discharge direction of water vapor externally discharged from the heat storage material housing spaces 42. The more the water vapor flows upward, the higher the temperature distribution of the generated water vapor becomes. The temperature of the water is initially low when the water is supplied into the branch tubes 54. By aligning the water supply direction in a bottom-up direction so as to be consistent with the temperature distribution of the generated water vapor, unfavorable phenomena can be avoided, such as the generated water vapor being liquefied as the water vapor is cooled by water having a low temperature that has just been supplied into the branch tubes 54 at the vertical direction upper side in the reaction vessel or, inversely, water that has just been supplied into the branch tubes 54 being boiled by the water vapor at a higher temperature at the vertical direction lower side in the reaction vessel.

Ideally, heat generation and water vapor generation is performed at the vertical direction lower side in the reaction vessel, heat generation and super-heating of the water vapor is preferably performed at the vertical direction upper side in the reaction vessel.

Accordingly, when the plural ejection outlets 50 are formed further lower side in the vertical direction of the water flow path forming wall section 56 than the unformed region 58 which is provided at the vertical direction top side (the side of the discharge outlets 48), as in the reactor vessel 10, the temperature at the peripheral area of the discharge outlets 48 can be suppressed from falling as water is not supplied towards the peripheral area of the discharge outlets 48 enabling efficient collection of heat generated in the hydration reaction at the vertical direction lower side for use in super-heating water vapor at the vertical direction top side (portions at the periphery of the discharge outlets 48).

Explanation follows regarding a modified example of an exemplary embodiment of the present invention.

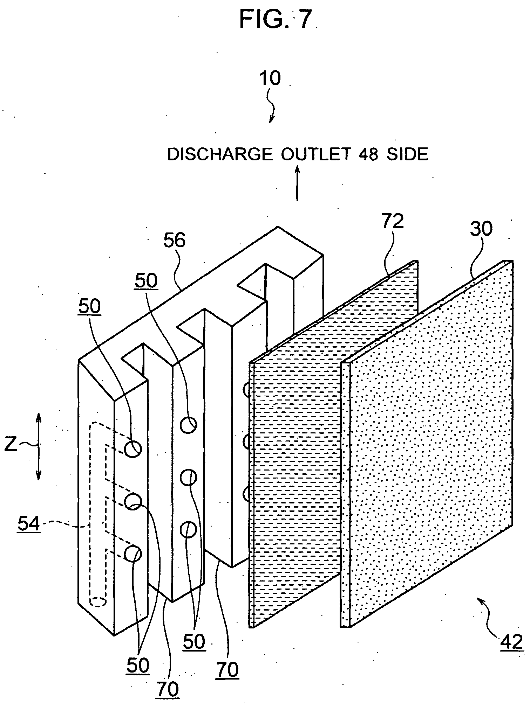

As shown in Fig. 7, plural water vapor flow paths 70 may be formed at portions of the water flow path forming wall section 56 other than the locations of the plural ejection outlets 50. The water vapor flow paths 70 are in communication with the heat storage material housing spaces 42 and are formed for letting water vapor generated in the chemical heat storage material 30 flow through. In such a modified example, the plural water vapor flow paths 70 may be formed so as to extend in the vertical direction (Z direction) and to be arrayed in a row along the horizontal direction.

When such a configuration is adopted, the cross-sectional area of the flow paths for water vapor is enlarged and pressure loss accompanying flow of internal water vapor towards neighborhood is reduced, whereby smooth discharge of water vapor can be accomplished. Furthermore, water vapor at a higher temperature can be generated since generated water vapor can further be supplied to the chemical heat storage material 30 which has been supplied with water and generated heat.

Since the water vapor flow paths 70 are formed at portions where the plural ejection outlets 50 are not located, the generated water vapor can be suppressed from flowing into the ejection outlets 50 and impeding water from being supplied from the ejection outlets 50 to the chemical heat storage material 30.

A porous body 72 may be provided between the water flow path forming wall section 56 and the chemical heat storage material 30 so as to finely break up the openings of the plural ejection outlets 50 and the openings of the water vapor flow paths 70 on the heat storage material housing space 42 side. As an example, a mesh made from stainless steel may be employed as such a porous body 72. By adopting such a configuration, any matter ejected by the chemical heat storage material 30 reacting can be suppressed from clogging up the plural ejection outlets 50 and/or the water vapor flow paths 70.

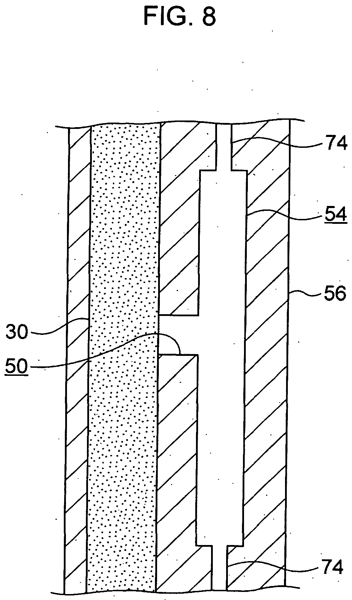

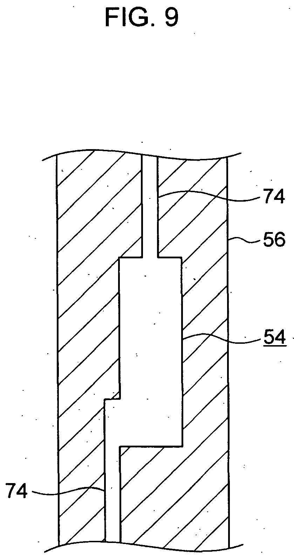

As shown in Fig. 8 and Fig. 9, the branch tubes 54 may include pressure increasing portions 74 that, on progression along the flow direction, have stepped reductions in cross-sectional area orthogonal to the direction of flow.

When such a configuration is adopted, the pressure of water flowing in the branch tubes 54 can be controlled gradually by the pressure increasing portions 74.

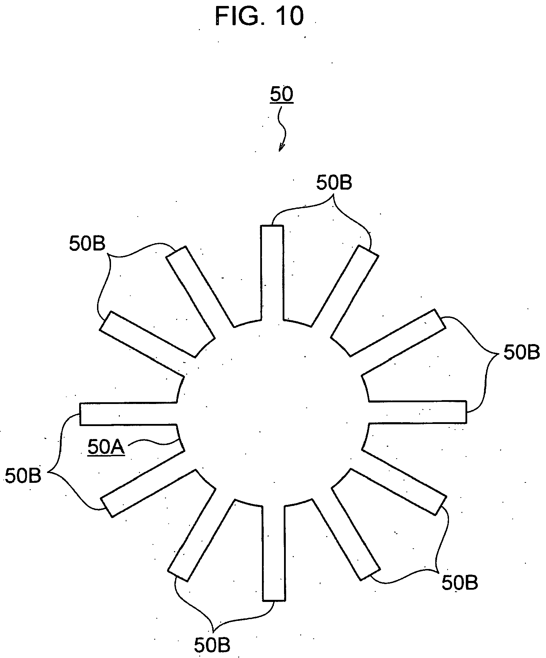

As shown in Fig. 10, each of the plural ejection outlets 50 may be configured to include a circular shaped portion 50A and plural elongated holes 50B formed in a shape radiating out from the outer periphery of the circular shaped portion 50A.

When such a configuration is adopted, the wet surface areas provided by opening of the ejection outlets 50 on wall portions of the chemical heat storage material 30 can be expanded by the amount of the plural elongated holes 50B.

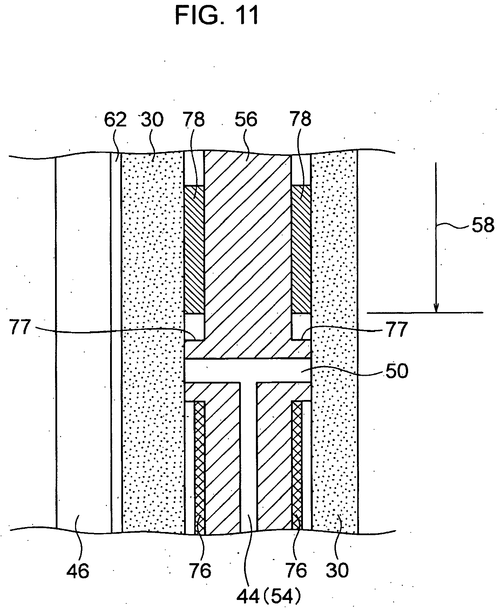

Heat insulating portions 76 may also be provided between the water flow path forming wall section 56 and the chemical heat storage material 30, as shown in Fig. 11.

When such a configuration is adopted, the heat of the chemical heat storage material 30 can be suppressed from being transmitted to the water flow path 44 (the branch tubes 54) and water vapor can be suppressed from being generated inside the water flow path 44.

Projection shaped restraining portions 77 may also be formed to the water flow path forming wall section 56, as shown in Fig. 11, such that the chemical heat storage material 30 is restrained by the separating wall section 62, which is provided between the heating medium flow paths 46 and the heat storage material housing spaces 42, and the restraining portions 77 (the water flow path forming wall section 56).

When such a configuration is adopted, the chemical heat storage material 30 can be suppressed from disintegrating due to changes in volume accompanying hydration and dehydration reactions.

Heat transmitting sections 78 may also be provided between the unformed region 58 of the water flow path forming wall section 56 and the chemical heat storage material 30, as shown in Fig. 11. Fins or a porous body can be employed, for example, as such heat transmitting sections 78.

When such a configuration is adopted, heat exchange by convection can be promoted between the chemical heat storage material 30 that is in a heat generating state and the water flow path forming wall section 56, and the water vapor at a higher temperature can be more efficiently generated.

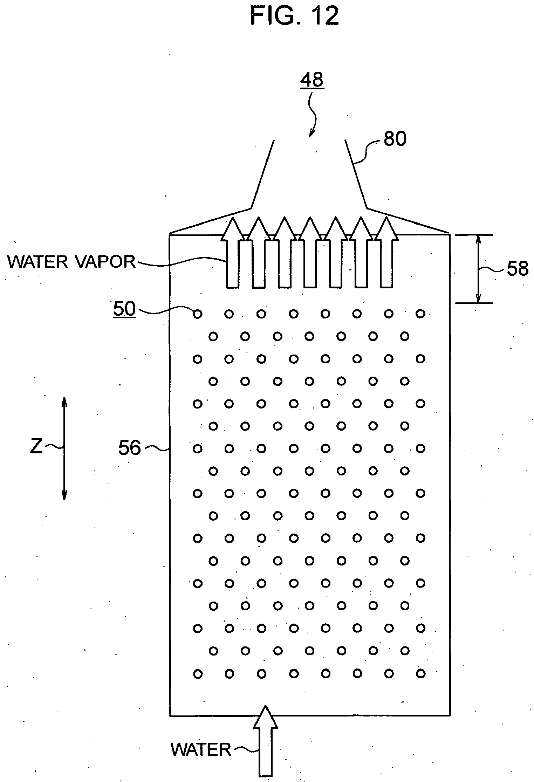

A funneling section 80 may also be formed to the discharge outlets 48 so as to reduce in size on progression towards the vertical direction top side, as shown in Fig. 12.

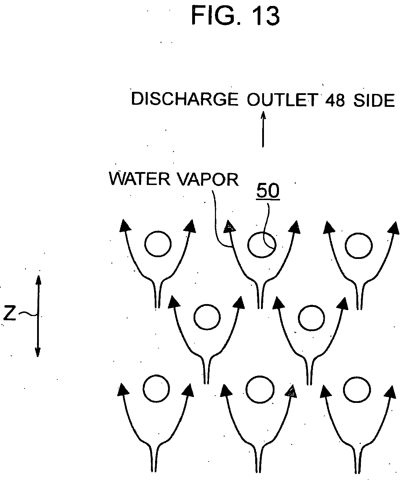

When such a configuration is adopted, smoother discharge of water vapor can be performed (see Fig. 13) by reducing pressure loss accompanying flow of internal water vapor towards the neighborhood as the internal cross-sectional area of the flow path for water vapor spreads out below the discharge outlets 48. A drop in temperature due to liquid water remaining can be suppressed by reducing the water vapor space at the discharge outlets 48.

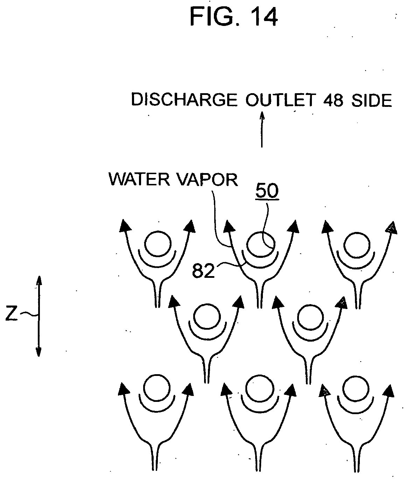

Configuration may also be made with shielding portions 82 provided at the vertical direction bottom side of each of the plural ejection outlets 50 to block water vapor, which flows in the vertically upwards direction, from flowing inside the heat storage material housing spaces 42, as shown in Fig. 14. In such a modified example, the shielding portions 82 may be formed with circular arc shape profiles projecting downwards in the vertical direction.

There is a tendency shown at the vicinity of the ejection outlets 50 that the water supplied by the ejection outlets 50 and the water vapor generated at the vertical direction lower side from the ejection outlets 50 to interfere with each other so as to impede dissipation of the supplied water from the ejection outlets 50. Water supply is accomplished by ejection from ejection outlets disposed in a distributed array, and there is a need for ejected water to be uniformly dispersed so as to fill in areas between the ejection outlets 50 (wetting out). However water vapor generated at the vertical direction lower side flows within the heat storage material housing spaces 42 while the flow amount and speed of generated water vapor increases.

Consequently, when the shielding portions 82 are provided at the vertical direction bottom side of each of the plural ejection outlets 50, as in the present modified example, such that water vapor flowing upwards in the vertical direction inside the heat storage material housing spaces 42 is blocked, interference to the ejection outlets 50 by the water vapor flowing from the lower side is suppressed, so as to enable efficient dispersed water supply (wetting out) from the ejection outlets 50.

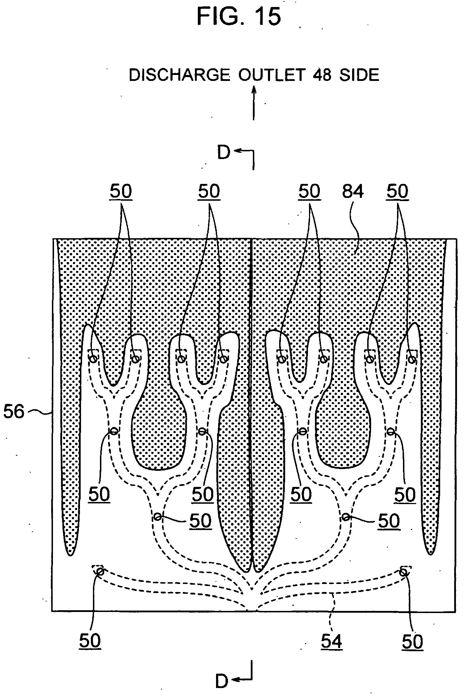

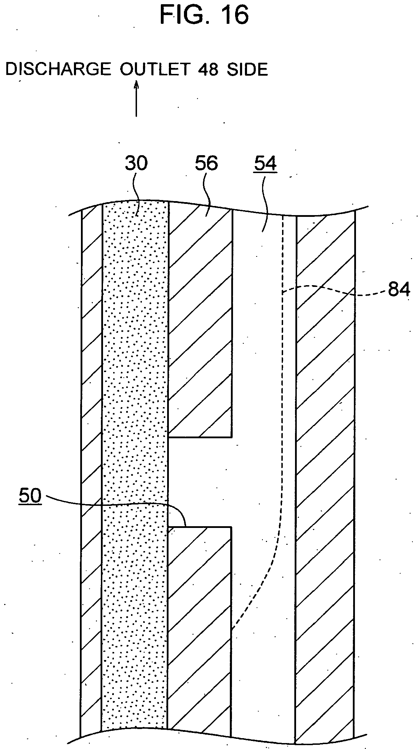

As shown in Fig. 15 and Fig. 16, configuration may be made such that a thinned portion 84 is formed in the water flow path forming wall section 56 at portions other than locations where the water flow path 44 is formed, such that the cross-sectional area of the heat storage material housing spaces 42 is effectively expanded on progression towards the vertical direction top side (the discharge outlets 48 side). For ease of understanding, the thinned portion 84 is illustrated by the region indicated with a dot pattern in Fig. 15.

With the reactor vessel 10, an increase in flow speed of the water vapor is caused along the flow direction due to the amount of generated water vapor increasing and the temperature of the generated water vapor rising. Accordingly, in such a modified example, the heat storage material housing spaces 42 have a cross-sectional area that expands on progression towards the discharge outlets 48, and smooth water vapor discharge can be performed since the pressure loss accompanying flow of internal water vapor towards the neighborhood is reduced.

Since the thinned portion 84 is formed at portions in the water flow path forming wall section 56 other than the locations where the water flow path 44 has been formed, the cross-sectional area of the heat storage material housing spaces 42 expands while still securing the cross-sectional area of the water flow path 44. The pressure loss accompanying flow of the internal water vapor towards the neighborhood is hence reduced and smooth water vapor discharge can be performed.

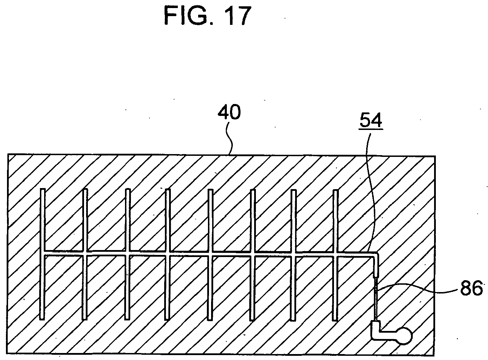

As shown in Fig. 17, configuration may also be made with branch tubes 54 that include a pressure regulation section 86 formed from a capillary tube or orifice.

When such a configuration is adopted, since the internal pressure of the branch tubes 54 is adjusted by the pressure regulation section 86, the amount of water flowing in each portion of the branch tubes 54 can be made uniform.

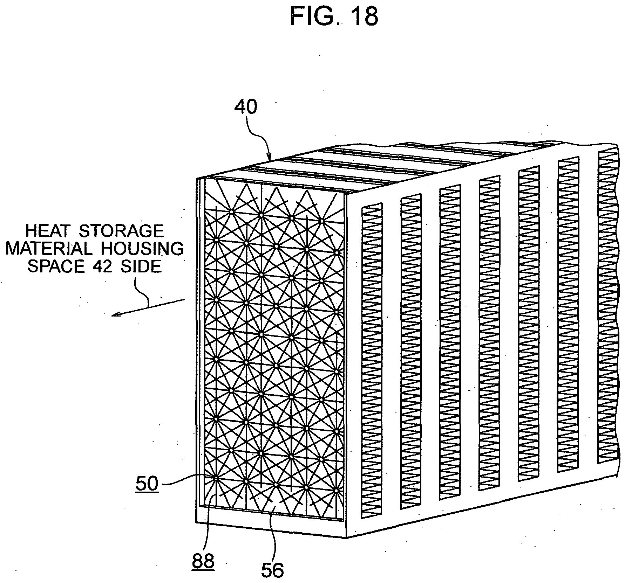

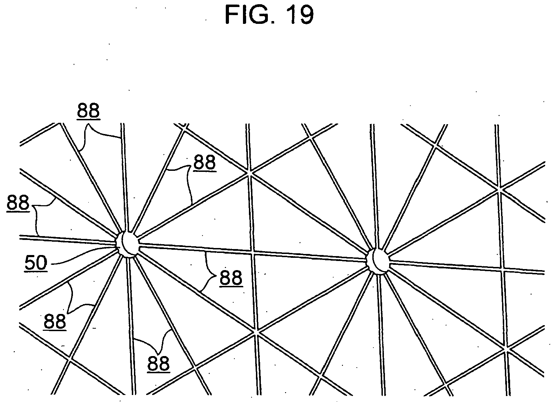

Configuration may also be made, as shown in Fig. 18 and Fig. 19, with plural fine grooves 88 (microgrooves) are formed in the wall face on the heat storage material housing space 42 side of the water flow path forming wall section 56. The fine grooves 88 connect the plural ejection outlets 50 and are formed with a width dimension smaller than the diameter dimension of each of the plural ejection outlets 50.

When such a configuration is adopted, water can be supplied by capillary action of the fine grooves 88 to the whole of the chemical heat storage material 30 (see for example Fig. 4).

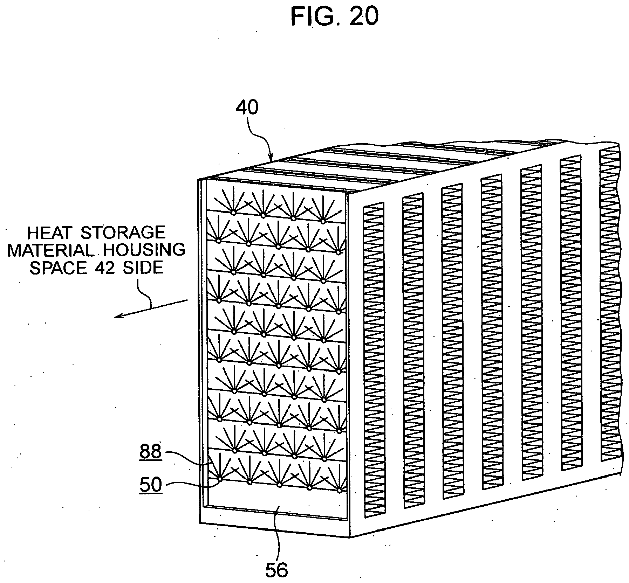

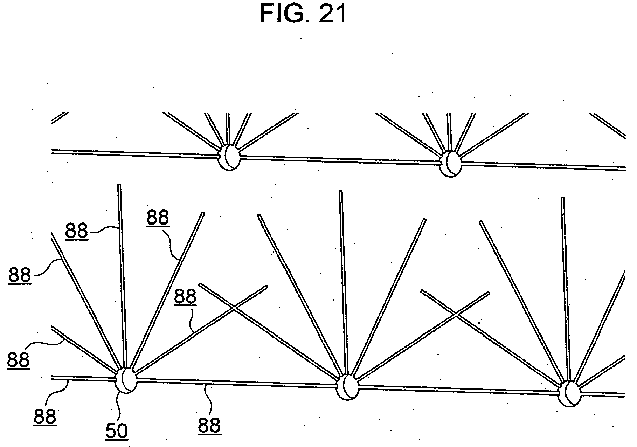

The plural fine grooves 88 may also be configured so as to extend out from each of the plural ejection outlets 50 toward the vertical direction top side, as shown in Fig. 20 and Fig. 21.

When such a configuration is adopted, not only can water be supplied to the whole of the chemical heat storage material 30 by utilizing the capillary action of the fine grooves 88, but the flow of water from the fine grooves 88 towards the vertical direction bottom side can also be suppressed.

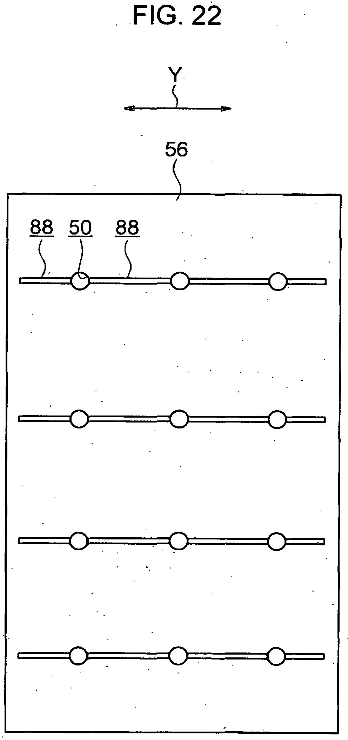

Configuration may also be made, as shown in Fig. 22, in which the plural fine grooves 88 extend out in a horizontal direction (X direction) from each of the plural ejection outlets 50.

When such a configuration is adopted, not only can a water retention ability be secured for the wall face on the heat storage material housing space 42 side of the water flow path forming wall section 56, but also water from the fine grooves 88 can be suppressed from flowing towards the vertical direction bottom side.

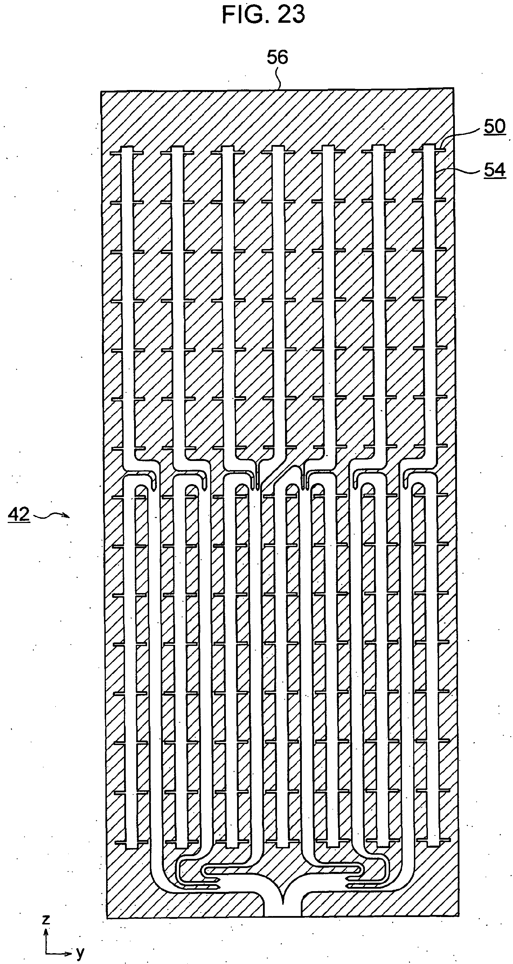

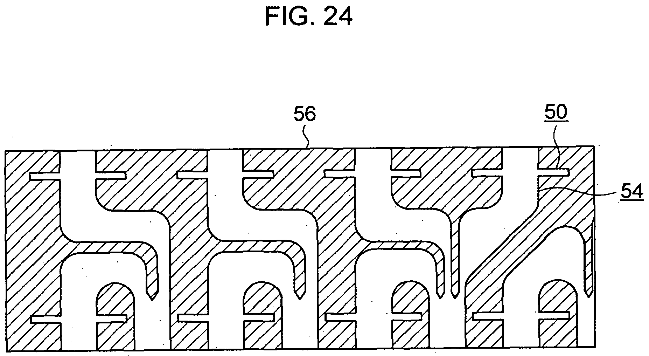

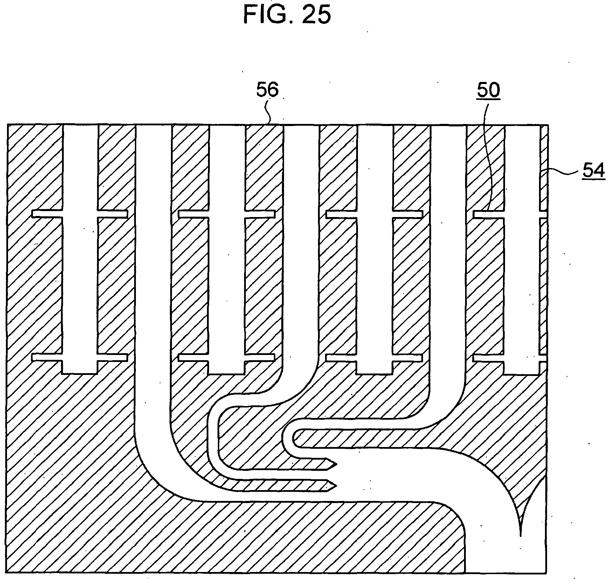

As shown in Fig. 23 to Fig. 25, the branch tubes 54 with the plural ejection outlets 50 may be formed in the following manner. Namely, in such a modified example, the plural ejection outlets 50 are provided so as to be provided for an area having the largest surface area (in this case an area spread in YZ directions) within 3 surface areas spread in XY directions, XZ direction, or YZ directions of the plate shaped (rectangular body) heat storage material housing spaces 42. A greater number of the plural ejection outlets 50 can thereby be provided, and uniform water supply to the whole of the chemical heat storage material 30 (see for example Fig. 4) can be achieved. Alternatively, by forming the heat storage material housing spaces 42 in thin plate shapes, water can also be readily supplied to the most inner side of the chemical heat storage material 30.

In such a modified example, in order to uniformly supply water to the plural ejection outlets 50, the branch tubes 54 are branched into plural flow paths formed as a whole in a tree shape. In order to utilize the dynamic pressure of water being transported to distribute the water without stagnation occurring, the shape of each of the branched portions of the branch tubes 54 is preferably made at as acute an angle as possible with respect to the direction of water flow. The plural ejection outlets 50 are provided at each location of the branch tubes 54. The flow path pressure loss of the branch tubes 54 is accordingly set so as to be sufficiently smaller than any pressure loss caused by decreased flow or increased flow of the water at the plural ejection outlets. Water can accordingly be supplied to the chemical heat storage material 30 from all of the plural ejection outlets 50.

Suitable combinations may be implemented of combinable modified examples from the above plural modified examples.

While explanation of the present invention has been made by way of exemplary embodiments above, the present invention is not limited thereto and various other modifications may be implemented within a scope not departing from the scope of the present invention.

Japanese Patent Application No. 2011-80217 is incorporated herein by reference. All publications, patent applications, and technical standards mentioned in this specification are herein incorporated by reference to the same extent as if each individual publication, patent application, or technical standard was specifically and individually indicated to be incorporated by reference.

## Claims

1. A reaction vessel (10) comprising:
a chemical heat storage material (30) for generating water vapor by reaction heat that is generated when the chemical heat storage material (30) reacts with water, and storing heat by heating to separate water from the chemical heat storage material (30); and
a heat exchanger (40) that internally houses the chemical heat storage material (30), wherein the heat exchanger comprises:
a heat storage material housing space (42) in which the chemical heat storage material (30) is housed, **characterized in that** the heat exchanger further comprises:
a water flow path (44) comprised with a plurality of ejection outlets (50) in communication with the heat storage material housing space (42), a main tube (52) connected to an external water supply section, and a branch tube (54) in communication with the main tube (52) and the plurality of ejection outlets (50), and
a heating medium flow path (46) through which a heating medium is caused to flow for heating the chemical heat storage material (30), whereby
the plurality of ejection outlets (50) is arrayed in a staggered formation.

2. The reaction vessel (10) of claim 1 wherein the branch tube (54) is formed in a tree shape comprising a plurality of branching sections.

3. The reaction vessel (10) of claim 1 or 2 wherein:
the heat storage material housing space (42) extends along a vertical direction and comprises a discharge outlet (48) at a vertical direction top side end section of the heat storage material housing space (42) for externally discharging water vapor generated by the chemical heat storage material (30); and
a direction of flow of supplied water in the branch tube (54) is aligned with a direction in which the water vapor is discharged.

4. The reaction vessel (10) of any one of claim 1 to claim 3 wherein:
the heat exchanger (40) comprises a water flow path forming wall section (56) in which the water flow path (44) is formed.

5. The reaction vessel (10) of claim 4, wherein the water flow path forming wall section (56) is provided with an ejection-outlet unformed region (58) at the discharge outlet side and the plurality of ejection outlets (50) is formed further to the vertical direction lower side than the ejection-outlet unformed region (58).

6. The reaction vessel (10) of claim 5, wherein a heat transfer section (78)is provided between the ejection-outlet unformed region (58) of the water flow path forming wall section (56) and the chemical heat storage material (30).

7. The reaction vessel (10) of any one of claim 1 to claim 6, wherein a shielding portion (82) is provided at a vertical direction bottom side of each of the plurality of ejection outlets (50) to block water vapor that flows towards a vertical direction top side inside the heat storage material housing space (42).

8. The reaction vessel (10) of any one of claim 4 to claim 7, wherein a water vapor flow path (70) is formed at portions of the water flow path forming wall section (56) other than at locations where the plurality of ejection outlets (50) are formed, the water vapor flow path (70) being in communication with the heat storage material housing space (42) and letting water vapor generated by the chemical heat storage material (30) flow through.

9. The reaction vessel (10) of any one of claim 1 to claim 8, wherein the branch tube (54) comprises a pressure increasing portion (74) that, on progression along the flow direction of the water, has a stepped reduction in cross-sectional area orthogonal to the flow direction.

10. The reaction vessel (10) of any one of claim 1 to claim 9, wherein the plurality of ejection outlets (50) comprises a circular shape portion (50A) and a plurality of elongated holes (50B) formed in a shape radiating out from an outer periphery of the circular shaped portion (50A).

11. The reaction vessel (10) of any one of claim 4 to claim 10, wherein a heat insulating portion (76) is provided between the water flow path forming wall section (56) and the chemical heat storage material (30).

12. The reaction vessel (10) of any one of claim 4 to claim 11 wherein:
the heat exchanger (40) further comprises a separating wall section (62) between the heating medium flow path (46) and the heat storage material housing space (42); and
the chemical heat storage material (30) is restrained by the separating wall section (62) and the water flow path forming wall section (56).

13. The reaction vessel (10) of any one of claim 1 to claim 12 wherein:
the branch tube (54) comprises a pressure regulation section (86) formed by a capillary tube or orifice.

14. The reaction vessel (10) of any one of claim 4 to claim 13, wherein a plurality of fine grooves (88) are formed on a wall face at the heat storage material housing space side of the water flow path forming wall section (56), wherein the fine grooves (88) are connected to the plurality of ejection outlets (50) and a width dimension of each of the fine grooves (88) is smaller than a diameter dimension of the plurality of ejection outlets (50).

15. The reaction vessel (10) of claim 14, wherein the plurality of fine grooves (88) extends from the plurality of ejection outlets (50) towards the vertical direction top side or wherein
the plurality of fine grooves (88) extends in a horizontal direction from the plurality of ejection outlets (50).

## Patentansprüche

1. Reaktionsbehälter (10), umfassend:
ein chemisches Wärmespeichermaterial (30) zum Erzeugen von Wasserdampf durch Reaktionswärme, die erzeugt wird, wenn das chemische Wärmespeichermaterial (30) mit Wasser reagiert, und zum Speichern von Wärme durch Erwärmen zum Abtrennen von Wasser von dem chemischen Wärmespeichermaterial (30), und
einen Wärmetauscher (40), der in seinem Inneren das chemische Wärmespeichermaterial (30) enthält, wobei der Wärmetauscher umfasst:
einen Wärmespeichermaterialunterbringungsraum (42), in dem das chemische Wärmespeichermaterial (30) untergebracht ist, **dadurch gekennzeichnet, dass** der Wärmetauscher ferner umfasst:
einen Wasserströmungsweg (44), der eine Mehrzahl von Ausstoßauslässen (50) in Verbindung mit dem Wärmespeichermaterialunterbringungsraum (42) umfasst, ein Hauptrohr (52), das mit einem externen Wasserzuführungsabschnitt verbunden ist, und ein Verzweigungsrohr (54) in Verbindung mit dem Hauptrohr (52) und der Mehrzahl von Ausstoßauslässen (50) und
einen Heizmediumströmungsweg (46), durch den ein Heizmedium zum Erwärmen des chemischen Wärmespeichermaterials (30) strömen gelassen wird, wobei die Mehrzahl von Ausstoßauslässen (50) in einer versetzten Anordnung ausgebildet ist.

2. Reaktionsbehälter (10) nach Anspruch 1, bei dem das Verzweigungsrohr (54) in einer Baumform ausgebildet ist, die eine Mehrzahl von Verzweigungsabschnitten umfasst.

3. Reaktionsbehälter (10) nach Anspruch 1 oder 2, bei dem
sich der Wärmespeichermaterialunterbringungsraum (42) entlang einer vertikalen Richtung erstreckt und einen Abgabeauslass (48) bei einem Endabschnitt der Oberseite in der vertikalen Richtung des Wärmespeichermaterialunterbringungsraums (42) zum Abgeben von Wasserdampf, der durch das chemische Wärmespeichermaterial (30) erzeugt worden ist, nach außen umfasst, und
die Richtung des Strömens von zugeführtem Wasser in dem Verzweigungsrohr (54) mit der Richtung ausgerichtet ist, in welcher der Wasserdampf abgegeben wird.

4. Reaktionsbehälter (10) nach einem der Ansprüche 1 bis 3, bei dem
der Wärmetauscher (40) einen Wasserströmungsweg-bildenden Wandabschnitt (56), in dem der Wasserströmungsweg (44) ausgebildet ist, umfasst.

5. Reaktionsbehälter (10) nach Anspruch 4, bei dem der Wasserströmungsweg-bildende Wandabschnitt (56) an der Abgabeauslassseite mit einem Bereich (58) versehen ist, in dem kein Ausstoßauslass ausgebildet ist, und die Mehrzahl von Ausstoßauslässen (50) weiter zu der unteren Seite in der vertikalen Richtung ausgebildet ist als der Bereich (58), in dem kein Ausstoßauslass ausgebildet ist.

6. Reaktionsbehälter (10) nach Anspruch 5, bei dem ein Wärmeübertragungsabschnitt (78) zwischen dem Bereich (58), in dem kein Ausstoßauslass ausgebildet ist, des Wasserströmungsweg-bildenden Wandabschnitts (56) und dem chemischen Wärmespeichermaterial (30) bereitgestellt ist.

7. Reaktionsbehälter (10) nach einem der Ansprüche 1 bis 6, bei dem ein Abschirmungsabschnitt (82) bei einer unteren Seite in der vertikalen Richtung von jedem der Mehrzahl von Ausstoßauslässen (50) zum Blockieren von Wasserdampf bereitgestellt ist, der in die Richtung einer oberen Seite in der vertikalen Richtung innerhalb des Wärmespeichermaterialunterbringungsraums (42) strömt.

8. Reaktionsbehälter (10) nach einem der Ansprüche 4 bis 7, bei dem ein Wasserdampfströmungsweg (70) an Abschnitten des Wasserströmungsweg-bildenden Wandabschnitts (56) ausgebildet ist, die von Stellen verschieden sind, bei denen die Mehrzahl von Ausstoßauslässen (50) ausgebildet ist, wobei der Wasserdampfströmungsweg (70) mit dem Wärmespeichermaterialunterbringungsraum (42) in Verbindung steht und Wasserdampf, der durch das chemische Wärmespeichermaterial (30) erzeugt worden ist, durchströmen lässt.

9. Reaktionsbehälter (10) nach einem der Ansprüche 1 bis 8, bei dem das Verzweigungsrohr (54) einen Druckerhöhungsabschnitt (74) umfasst, der im Verlauf entlang der Strömungsrichtung des Wassers eine abgestufte Verminderung der Querschnittsfläche orthogonal zu der Strömungsrichtung aufweist.

10. Reaktionsbehälter (10) nach einem der Ansprüche 1 bis 9, bei dem die Mehrzahl von Ausstoßauslässen (50) einen kreisförmigen Abschnitt (50A) und eine Mehrzahl von Langlöchern (50B) umfasst, die in einer Form ausgebildet sind, die strahlenförmig von einem Außenumfang des kreisförmigen Abschnitts (50A) ausgeht.

11. Reaktionsbehälter (10) nach einem der Ansprüche 4 bis 10, bei dem ein Wärmeisolierabschnitt (76) zwischen dem Wasserströmungsweg-bildenden Wandabschnitt (56) und dem chemischen Wärmespeichermaterial (30) bereitgestellt ist.

12. Reaktionsbehälter (10) nach einem der Ansprüche 4 bis 11, bei dem
der Wärmetauscher (40) ferner einen Trennwandabschnitt (62) zwischen dem Wärmemediumströmungsweg (46) und dem Wärmespeichermaterialunterbringungsraum (42) umfasst und
das chemische Wärmespeichermaterial (30) durch den Trennwandabschnitt (62) und den Wasserströmungsweg-bildenden Wandabschnitt (56) zurückgehalten wird.

13. Reaktionsbehälter (10) nach einem der Ansprüche 1 bis 12, bei dem das Verzweigungsrohr (54) einen Druckregulierabschnitt (86) umfasst, der durch ein Kapillarröhrchen oder eine Kapillaröffnung ausgebildet ist.

14. Reaktionsbehälter (10) nach einem der Ansprüche 4 bis 13, bei dem eine Mehrzahl von feinen Rillen (88) auf einer Wandfläche auf der Seite des Wärmespeichermaterialgehäuses des Wasserströmungsweg-bildenden Wandabschnitts (56) ausgebildet ist, wobei die feinen Rillen (88) mit der Mehrzahl von Ausstoßauslässen (50) verbunden sind und die Breitenabmessung von jeder der feinen Rillen (88) kleiner ist als die Durchmesserabmessung der Mehrzahl von Ausstoßauslässen (50).

15. Reaktionsbehälter (10) nach Anspruch 14, bei dem sich die Mehrzahl von feinen Rillen (88) von der Mehrzahl von Ausstoßauslässen (50) in die Richtung der oberen Seite in der vertikalen Richtung erstreckt oder wobei sich die Mehrzahl von feinen Rillen (88) in einer horizontalen Richtung von der Mehrzahl von Ausstoßauslässen (50) erstreckt.

## Revendications

1. Cuve de réaction (10) comprenant :
un matériau de stockage de chaleur chimique (30) pour générer de la vapeur d'eau par la chaleur de réaction qui est générée quand le matériau de stockage de chaleur chimique (30) réagit avec l'eau et pour stocker la chaleur par chauffage afin de séparer l'eau du matériau de stockage de chaleur chimique (30) ; et
un échangeur de chaleur (40) qui loge intérieurement le matériau de stockage de chaleur chimique (30), dans laquelle l'échangeur de chaleur comprend :
un espace de logement (42) de matériau de stockage de chaleur dans lequel le matériau de stockage de chaleur chimique (30) est logé, **caractérisée en ce que** l'échangeur de chaleur comprend en outre :
un trajet d'écoulement d'eau (44) composé d'une pluralité de sorties d'éjection (50) en communication avec l'espace de logement (42) de matériau de stockage de chaleur, un tube principal (52) raccordé à une section externe d'alimentation en eau et un tube de dérivation (54) en communication avec le tube principal (52) et la pluralité de sorties d'éjections (50), et
un trajet d'écoulement d'agent chauffant (46) à travers lequel un agent chauffant est amené à s'écouler pour chauffer le matériau de stockage de chaleur chimique (30), moyennant quoi la pluralité de sorties d'éjection (50) sont agencées selon une formation en quinconce.

2. Cuve de réaction (10) selon la revendication 1 dans laquelle le tube de dérivation (54) est formé selon une forme d'arbre comprenant une pluralité de sections de dérivation.

3. Cuve de réaction (10) selon la revendication 1 ou 2 dans laquelle :
l'espace de logement (42) de matériau de stockage de chaleur s'étend le long d'une direction verticale et comprend une sortie de décharge (48) au niveau d'une section d'extrémité latérale supérieure de direction verticale de l'espace de logement (42) de matériau de stockage de chaleur pour décharger à l'extérieur la valeur d'eau générée par le matériau de stockage de chaleur chimique (30) ; et
une direction d'écoulement d'eau apportée dans le tube de dérivation (54) est alignée sur une direction dans laquelle la vapeur d'eau est déchargée.

4. Cuve de réaction (10) selon l'une quelconque des revendications 1 à 3 dans laquelle :
l'échangeur de chaleur (40) comprend une section de paroi (56) formant trajet d'écoulement d'eau dans laquelle est formé le trajet d'écoulement d'eau (44).

5. Cuve de réaction (10) selon la revendication 4, dans laquelle la section de paroi (56) formant trajet d'écoulement d'eau est pourvue d'une région non formée de sortie d'éjection (58) au niveau du côté de sortie de décharge et la pluralité de sorties d'éjection (50) sont formées plus vers le côté inférieur de direction verticale que la région non formée de sortie d'éjection (58).

6. Cuve de réaction (10) selon la revendication 5, dans laquelle une section de transfert de chaleur (78) est prévue entre la région non formée de sortie d'éjection (58) de la section paroi (56) formant trajet d'écoulement d'eau et le matériau de stockage de chaleur chimique (30).

7. Cuve de réaction (10) selon l'une quelconque des revendications 1 à 6, dans laquelle une partie de protection (82) est prévue au niveau d'un côté inférieur de direction verticale de chaque sortie de la pluralité de sorties d'éjection (50) pour bloquer la vapeur d'eau qui s'écoule vers un côté supérieur de direction verticale à l'intérieur de l'espace de logement (42) de matériau de stockage de chaleur.

8. Cuve de réaction (10) selon l'une quelconque des revendications 4 à 7, dans laquelle un trajet d'écoulement de vapeur d'eau (70) est formé au niveau de parties de la section paroi (56) formant trajet d'écoulement d'eau autres qu'à des endroits où la pluralité de sorties d'éjection (50) sont formées, le trajet d'écoulement de vapeur d'eau (70) étant en communication avec l'espace de logement (42) de matériau de stockage de chaleur et laissant la vapeur d'eau générée par le matériau de stockage de chaleur chimique (30) s'écouler à travers celui-ci.

9. Cuve de réaction (10) selon l'une quelconque des revendications 1 à 8, dans laquelle le tube de dérivation (54) comprend une partie d'augmentation de pression (74) qui, lors de la progression le long de la direction d'écoulement de l'eau, présente une réduction échelonnée de la superficie en coupe transversale orthogonale à la direction d'écoulement.

10. Cuve de réaction (10) selon l'une quelconque des revendications 1 à 9, dans laquelle la pluralité de sorties d'éjection (50) comprennent une partie de forme circulaire (50A) et une pluralité de trous allongés (50B) formés selon une forme rayonnant vers l'extérieur depuis une périphérie extérieure de la partie de forme circulaire (50A).

11. Cuve de réaction (10) selon l'une quelconque des revendications 4 à 10, dans laquelle une partie d'isolation thermique (76) est prévue entre la section paroi (56) formant trajet d'écoulement d'eau et le matériau de stockage de chaleur chimique (30).

12. Cuve de réaction (10) selon l'une quelconque des revendications 4 à 11 dans laquelle :
l'échangeur de chaleur (40) comprend en outre une section de paroi de séparation (62) entre le trajet d'écoulement d'agent chauffant (46) et l'espace de logement (42) de matériau de stockage de chaleur ; et
le matériau de stockage de chaleur chimique (30) est retenu par la section de paroi de séparation (62) et la section paroi (56) formant trajet d'écoulement d'eau.

13. Cuve de réaction (10) selon l'une quelconque des revendications 1 à 12 dans laquelle :
le tube de dérivation (54) comprend une section de régulation de pression (86) formée par un orifice ou tube capillaire.

14. Cuve de réaction (10) selon l'une quelconque des revendications 4 à 13, dans laquelle une pluralité de rainures fines (88) sont formées sur une face de paroi au niveau du côté d'espace de logement de matériau de stockage de chaleur de la section paroi (56) formant trajet d'écoulement d'eau, dans laquelle les rainures fines (88) sont reliées à la pluralité de sorties d'éjection (50) et une dimension en largeur de chacune des rainures fines (88) est plus petite qu'une dimension en diamètre de la pluralité de sorties d'éjection (50).

15. Cuve de réaction (10) selon la revendication 14, dans laquelle la pluralité de rainures fines (88) s'étendent depuis la pluralité de sorties d'éjection (50) vers le côté supérieur de direction verticale ou dans laquelle
la pluralité de rainures fines (88) s'étendent dans une direction horizontale depuis la pluralité de sorties d'éjection (50).
